(19) **Europäisches Patentamt**

**European Patent Office**

**Office européen des brevets**

(11) **EP 0 989 544 A1**

(12) **DEMANDE DE BREVET EUROPEEN**

(43) Date de publication:
**29.03.2000 Bulletin 2000/13**

(51) Int. Cl.7: **G10L 19/14**

(21) Numéro de dépôt: **99203004.9**

(22) Date de dépôt: **15.09.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **22.09.1998 FR 9811812**

(71) Demandeur:
**Koninklijke Philips Electronics N.V.
5621 BA Eindhoven (NL)**

(72) Inventeurs:
• **Miet, Gilles
75008 Paris (FR)**
• **Parayre-Mittova, Daniela
75008 Paris (FR)**

(74) Mandataire: **Chaffraix, Jean
Société Civile S.P.I.D.
156, Boulevard Haussmann
75008 Paris (FR)**

(54) **Dispositif et procédé de filtrage d'un signal de parole, récepteur et système de communications téléphonique**

(57) L'invention décrit un dispositif et un procédé de filtrage, un récepteur téléphonique et un système de communications pour filtrer un signal de parole ayant un spectre de fréquence présentant des formants séparés par des vallées, en vue d'amplifier lesdits formants et atténuer lesdites vallées, pour améliorer l'intelligibilité du signal. Pour cela, on utilise un circuit d'analyse prédictive du signal de parole pour déterminer un polynôme dont les coefficients sont des paramètres LPC et des moyens de calcul pour synthétiser un post-filtre numérique du type zéros-pôles à partir de ce polynôme. Le dispositif comporte un circuit d'extraction pour prélever des valeurs de pôles par extraction des racines du polynôme et un circuit d'interpolation entre lesdites valeurs de pôles pour en déduire les valeurs de zéros du post-filtre.

Applications : traitement de la parole, communications téléphoniques, radiotéléphonie mobile.

FIG.2

EP 0 989 544 A1

**Description**

L'invention concerne un dispositif de filtrage numérique pour filtrer un signal de parole ayant un spectre de fréquence présentant des formants séparés par des vallées, le dispositif comportant un circuit d'analyse prédictive du signal de parole et un organe de calcul pour synthétiser un post-filtre numérique du type zéros-pôles destiné à amplifier les formants et creuser les vallées.

Elle concerne également un récepteur téléphonique destiné à recevoir un signal de parole ayant un spectre de fréquence présentant des formants séparés par des vallées, comprenant un circuit d'analyse prédictive du signal de parole et un organe de calcul pour synthétiser un post-filtre numérique du type zéros-pôles destiné à amplifier les formants et creuser les vallées.

Elle concerne un système de communication de signaux de parole en bande de base ayant au moins un canal de transmission et comportant:

- un dispositif de codage / décodage de parole prédictif pour restituer un signal de parole numérique à partir d'un signal original codé transmis sur ledit canal,
- un bloc de filtrage pour filtrer ledit signal de parole numérique.

Elle concerne encore un procédé de filtrage pour filtrer un signal de parole ayant un spectre de fréquence présentant des formants séparés par des vallées, en vue d'amplifier les formants et creuser les vallées, comprenant:

- une étape d'analyse prédictive du signal de parole pour déterminer des coefficients LPC,
- une étape de calcul pour synthétiser un filtre du type zéros-pôles à partir desdits coefficients LPC et
- une étape de filtrage pour appliquer ledit filtre synthétisé au signal de parole.

L'invention concerne enfin un signal de parole obtenu par application d'un filtre numérique du type zéros-pôles à un premier signal de parole ayant un spectre de fréquence présentant des formants séparés par des vallées, ledit premier signal pouvant être modélisé à l'aide d'un filtre LPC inverse du type tous-pôles.

Elle a de nombreuses applications dans les communications vocales, notamment dans les systèmes de radiotéléphonie mobile.

Le brevet américain publié sous le numéro 4 617 676 décrit un système de communications numériques recevant en entrée un signal de parole ayant un spectre de fréquence présentant des formants séparés par des vallées, le système comprenant un décodeur prédictif de parole pour déterminer des paramètres prédictifs du signal reçu et un bloc de post-filtrage destiné à fournir en sortie un signal modifié en fonction des paramètres prédictifs, pour amplifier les formants et creuser les vallées.

L'intérêt du post-filtrage est d'augmenter la qualité audio de signaux de parole en vue d'améliorer leur intelligibilité et ainsi mieux répondre aux besoins des utilisateurs. Dans la suite, on désigne par le terme post-filtre, un filtre destiné à améliorer la qualité audio du signal.

L'art antérieur cité s'applique à un système de communications numériques comportant, en émission, un codeur prédictif de parole pour générer un modèle de parole à partir de paramètres LPC (de l'anglais Linear Predictive Coding) obtenus à l'aide d'un filtre d'analyse LPC du type zéros-pôles, c'est-à-dire ayant des pôles et des zéros, et en réception, un décodeur prédictif pour restituer un signal de parole à partir du modèle reçu, à l'aide d'un filtre de synthèse LPC et des moyens de post-filtrage pour améliorer la qualité du signal reconstitué en fonction des paramètres LPC fournis par le codeur prédictif. Pour le post-filtrage, il faut synthétiser un filtre numérique, dit post-filtre, de type zéros-pôles dont les valeurs de zéros et de pôles correspondent, à un facteur près, aux valeurs de zéros et de pôles du filtre d'analyse LPC. Le brevet américain cité prévoit ainsi d'utiliser, pour constituer le post-filtre, les pôles et les zéros obtenus par l'analyse LPC effectuée par le codeur de parole et transmis au décodeur. Les valeurs de pôles et de zéros reçues par le décodeur sont alors situées aux mêmes fréquences respectivement que les formants et les vallées du signal d'entrée.

La présente invention prévoit au contraire de n'utiliser que des valeurs de pôles définis par une analyse LPC et de calculer les valeurs de zéros du post-filtre par interpolation entre les valeurs de pôles issues de l'analyse LPC. Il en résulte une plus grande flexibilité dans la détermination des zéros dont la position peut être fixée avec précision en fonction de la qualité et de l'intelligibilité recherchées pour le signal de sortie. De plus, l'invention est compatible avec les codeurs de parole les plus répandus en radiotéléphonie GSM (de l'anglais Global System for Mobile communications), notamment les codeurs de parole plein débit conformes à la recommandation ETS 300 961 paragraphe 3, datée de décembre 97, deuxième édition. Ces codeurs fonctionnent avec des filtres d'analyse LPC de type tous-pôles qui ne transmettent au décodeur que des valeurs de pôle.

Selon l'invention, il est prévu un dispositif de filtrage et un récepteur téléphonique tels que mentionnés dans le paragraphe introductif remarquables en ce qu'ils comportent un circuit d'extraction pour prélever des valeurs de pôles en sortie du circuit d'analyse prédictive et pour les fournir audit organe de calcul et des moyens d'interpolation entre lesdites valeurs de pôles pour déterminer les valeurs de zéros.

L'invention prévoit également un système de communications tel que mentionné dans le paragraphe introductif, remarquable en ce que le bloc de filtrage comporte des moyens de calcul pour synthétiser un filtre numérique du type zéros-pôles, un circuit d'extraction pour prélever des valeurs de pôles en sortie du dispositif de codage / décodage de parole prédictif et des moyens d'interpolation entre lesdites valeurs de pôles pour déterminer les valeurs de zéros.

Il est aussi prévu un procédé du genre mentionné dans le paragraphe introductif remarquable en ce que l'étape de calcul comprend:

- une étape d'extraction destinée à extraire les racines d'un polynôme LPC construit à partir desdits coefficients LPC pour en déduire les valeurs de pôles et
- une étape d'interpolation entre lesdites valeurs de pôles pour déterminer lesdites valeurs de zéros.

Enfin, l'invention s'applique à un signal tel que décrit au paragraphe introductif caractérisé en ce que les valeurs de pôles du filtre de type zéros-pôles sont obtenues par extraction des pôles dudit filtre LPC inverse et en ce que les valeurs de zéros sont obtenues par un calcul d'interpolation entre lesdites valeurs de pôles du filtre de type tous-pôles.

L'invention est particulièrement avantageuse lorsque le signal a préalablement subi une analyse prédictive LPC et que ses paramètres LPC sont disponibles au moment du post-filtrage.

La description suivante, faite en regard des dessins ci-annexés, le tout donné à titre d'exemple non limitatif fera bien comprendre comment l'invention peut être réalisée.

La figure 1 est un graphique comportant deux courbes représentant le spectre d'un signal de parole avant et après filtrage selon l'invention.
La figure 2 schématise un dispositif de filtrage selon l'invention.
La figure 3 est un organigramme pour illustrer un procédé de filtrage selon l'invention.
La figure 4 est un schéma de principe d'un système de communications en bande de base selon l'invention.
La figure 5 est une représentation de la position des pôles et des zéros du post-filtre selon l'invention à l'intérieur du cercle unité.
La figure 6 est un schéma bloc d'un récepteur téléphonique selon l'invention.

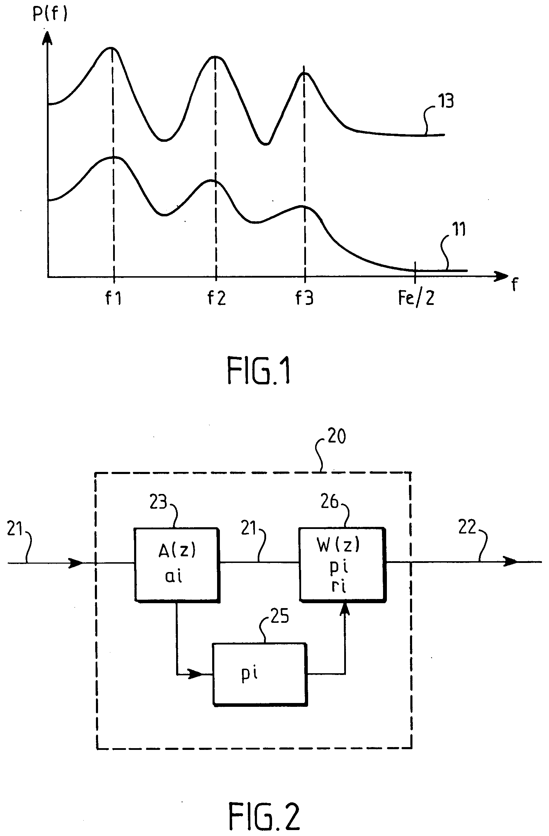

La courbe 11 sur la figure 1 est une représentation spectrale fréquentielle d'un signal de parole représentant l'amplitude P du spectre du signal en fonction de sa fréquence f. Ce signal peut être analogique ou numérique. Dans ce dernier cas, il peut par exemple provenir de la sortie d'un décodeur de parole prédictif du type basé sur des méthodes d'analyse LPC couramment utilisées en radiotéléphonie mobile et en particulier dans les systèmes de type GSM.

Ce spectre présente des formants ou pics d'amplitudes aux fréquences f1, f2 et f3 séparés par des vallées, f1, f2 et f3 étant inférieures à la plus haute fréquence du spectre notée Fe/2. Pour améliorer la qualité audio d'un tel signal, on prévoit un dispositif de post-filtrage destiné à amplifier les formants et creuser les vallées afin d'augmenter le contraste du signal. Le résultat après filtrage est représenté par la courbe 13. L'effet du post-filtrage est l'augmentation de l'intelligibilité de la parole. C'est un indicateur subjectif dépendant de la sensibilité de l'oreille. Un post-filtre peut être utilisé pour traiter des signaux de parole, notamment pour améliorer l'intelligibilité et compenser partiellement les pertes et les erreurs dues au codage, au décodage et à la transmission. Il a de nombreuses applications, dans les décodeurs de parole et les dispositifs de suppression de bruit.

La figure 2 schématise un dispositif de post-filtrage 20 selon l'invention recevant en entrée un signal de parole 21 ayant un spectre du type de celui portant la référence 11 sur la figure 1 et fournissant en sortie un signal filtré 22 dont le spectre peut être représenté par la courbe 13. Il comporte un circuit d'analyse prédictive à court terme 23 de type LPC pour déterminer les paramètres LPC du signal de parole et un circuit d'extraction 25 coopérant avec un organe de calcul 26 pour prélever en sortie du circuit d'analyse prédictive 23 des valeurs de pôles et pour les fournir en entrée à l'organe de calcul 26 pour synthétiser un post-filtre numérique de type zéros-pôles, destiné à filtrer le signal de parole 21 pour obtenir le signal 22.

Selon cet exemple, le signal d'entrée 21 est échantillonné à une fréquence Fe, environ deux fois égale à la plus haute fréquence du signal de parole original, de façon à ce que le circuit d'analyse prédictive 23 détermine, tous les 160 échantillons par exemple, les paramètres LPC du signal de parole. Ces paramètres, notés $a_i$, sont obtenus à l'aide d'un filtre d'analyse LPC A(z) dont l'équation s'écrit par exemple:

$$A(z) = 1 + \sum_{i=1}^{m} a_i z^{-i}$$

m étant l'ordre de prédiction du filtre. En plus des paramètres $a_i$, on obtient en sortie du filtre A(z) l'erreur résiduelle du signal qui sera ensuite filtrée par un filtre de synthèse, inverse du filtre d'analyse, pour reproduire le signal de parole avant le post-filtrage.

Les pôles du post-filtre destiné à produire le signal 22 sont fournis à l'organe de calcul 26 par le circuit d'extraction 25 qui les obtient par extraction des racines $p_i$ du polynôme A(z). Pour calculer les zéros, l'organe de calcul 26 effectue d'abord un classement des racines pi par ordre de fréquences croissantes entre 0 et 4 KHz environ, la fréquence d'échantillonnage Fe étant voisine de 8 KHz. On obtient ensuite les valeurs de ⟨⟨zéros⟩⟩, notées $r_i$, par un calcul d'interpolation entre les racines $p_i$ du polynôme A(z):

$$r_i = \frac{\alpha_1 p_i + \alpha_2 p_{i-1}}{2}$$

où $\alpha_1$ et $\alpha_2$ sont des coefficients positifs de pondération représentant le poids relatif des pôles pour le calcul des zéros. Les fréquences correspondant aux valeurs de zéros se trouvent ainsi positionnées entre les fréquences de pôles. Les pôles et les zéros du post-filtre étant déterminés, l'organe de calcul 26 synthétise le post-filtre W(z) dont l'équation s'écrit:

$$W(z) = \frac{1 + b_1(z/\chi_n)^{-1} + b_2(z/\chi_n)^{-2} + ... + b_m(z/\chi_n)^{-m}}{1 + a_1(z/\chi_d)^{-1} + a_2(z/\chi_d)^{-2} + ... + a_m(z/\chi_d)^{-m}}$$

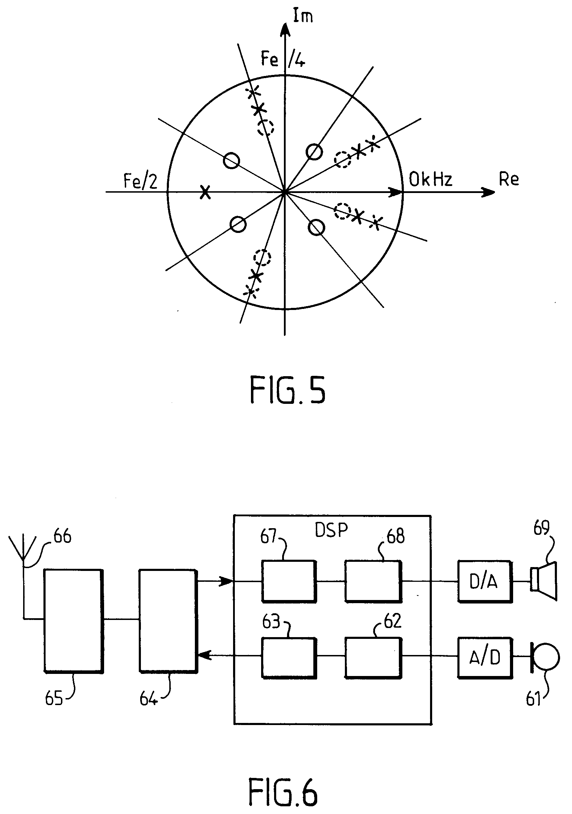

où $a_i$ sont les paramètres LPC issus du circuit d'analyse 23 et $b_i$ les coefficients du polynôme construit à partir des valeurs $r_i$ précédemment calculées. $\chi_d$ et $\chi_n$ sont des coefficients de pondération indiquant la distance de la racine au cercle unité comme illustré à la figure 5, avec $\chi_n < \chi_d < 1$.

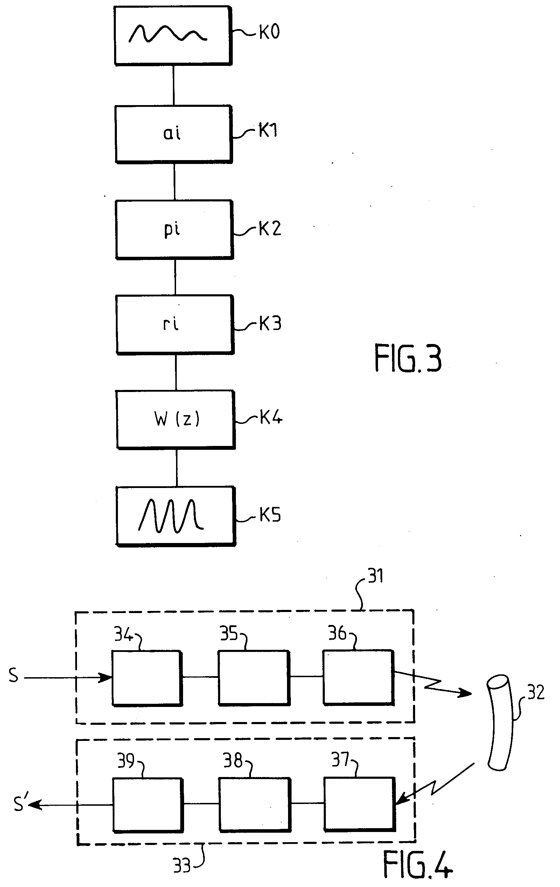

Un exemple de procédé de filtrage selon l'invention va maintenant être décrit en détails à l'aide de la figure 3. Il comprend les étapes K0 à K5 dont l'ordre d'exécution peut subir certaines variantes. La première, K0, est une étape de réception d'un signal de parole analogique ou numérique, ayant un spectre de fréquence présentant des formants séparés par des vallées. La deuxième étape, K1, réalise une analyse prédictive à court terme du signal reçu pour déterminer des coefficients $a_i$ du filtre d'analyse LPC caractéristique du signal à traiter. L'étape K2 consiste à extraire les racines $p_i$ du filtre LPC. L'étape K3 effectue une interpolation entre les racines $p_i$ pour en déduire des valeurs $r_i$. L'étape K4 est une étape de synthèse d'un filtre numérique W(z) du type zéros-pôles, dont les pôles sont les racines $p_i$ du filtre LPC et dont les zéros sont les valeurs $r_i$. Enfin, l'étape K5 consiste à appliquer le filtre synthétisé au signal de parole pour fournir en sortie un signal dont le spectre est modifié par rapport au spectre du signal d'entrée dans le sens d'une amplification des formants et un accentuation des vallées.

Selon des variantes de réalisation de ce procédé, certaines étapes dont le but est de fournir des résultats de calcul ou d'analyse utilisés dans d'autres étapes peuvent être réalisées préalablement à l'étape K0 de réception du signal. Prenons l'exemple d'un système de type GSM dont la chaîne de communications est illustrée à la figure 4. Selon la norme GSM, une analyse LPC est effectuée au cours de l'émission du message pendant la phase de codage du signal de parole. Les paramètres LPC, utilisés pour produire le modèle de parole qui sera ensuite transmis sur le canal de transmission, sont ainsi disponible dès l'émission du message, alors que le procédé de post-filtrage est exécuté à la fin de la chaîne de réception.

Dans une application de type GSM par exemple, l'étape d'analyse prédictive du signal de parole K1 pourra donc être avantageusement effectuée indépendamment du procédé de post-filtrage, avant l'étape de réception du signal K0 selon ledit procédé et les résultats seront prélevés au niveau du codeur de parole pour synthétiser la parole et le post-filtre. On peut également préférer refaire une analyse LPC spécialement pour le post-filtre comme dans le cas général. Dans un système de communications qui ne prévoit pas d'analyse LPC, cette étape d'analyse prédictive pourra être réalisée à la réception du signal, éventuellement par le décodeur lui-même ou encore sur le signal déjà décodé.

La figure 4 est un schéma bloc d'un système de communications numériques en bande de base classique. Il comprend une chaîne d'émission 31, au moins un canal de transmission 32 et une chaîne de réception 33. Selon un mode de réalisation de l'invention convenant particulièrement au système GSM, le signal de parole original 5 dont le spectre de fréquence est représenté par la courbe 11 sur la figure 1 est reçu en entrée de la chaîne d'émission 31 tandis que le signal de parole filtré S' dont le spectre est représenté par la courbe 13 est fourni en sortie de la chaîne de réception 33. Le système comprend en émission un bloc de pré-traitement 34, un bloc de codage de parole 35, un bloc de codage de canal 36 et en réception un bloc de décodage de canal 37, un bloc de décodage de parole 38 et un bloc de post-traitement 39.

Le bloc de pré-traitement 34 prépare le signal de parole pour 'encodage. Le codage de parole 35 consiste à modéliser la parole et à réduire la quantité d'informations à transmettre. Pour cela, on utilise une méthode incluant une prédiction à court terme telle que décrite dans la recommandation ETS 300 961 datée de décembre 97 seconde édition, paragraphe 3.1, pour produire un modèle de parole caractérisé par des paramètres de filtre LPC. Ces paramètres sont transmis au bloc de décodage 38 pour reconstituer le message de parole. Le filtre d'analyse A(z) utilisé pour extraire les caractéristiques LPC du signal de parole peut par exemple s'écrire:

$$A(z) = 1 + \sum_{i=1}^{m} a_i z^{-i}$$

où $a_i$ sont les paramètres LPC et m l'ordre de prédiction du filtre.

Le bloc de codage de canal 36 prépare les données pour la transmission et le bloc de décodage de canal 37 décode les données transmises pour permettre au décodeur de parole 38 de reconstituer le message de parole selon le processus inverse du codage. Il reçoit donc le modèle de parole transmis sur le canal et lui applique le filtre de synthèse noté 1/A(z) inverse du filtre d'analyse:

$$\frac{1}{A(z)} = \frac{1}{1 + \sum_{i=1}^{m} a_i z^{-i}}$$

Le bloc de post-traitement 39 a pour objet d'améliorer la qualité audio du signal fourni en sortie et en particulier son intelligibilité. Un post-filtre classique s'écrit sous la forme:

$$W(z) = \frac{1 + a_1(z/\chi_n)^{-1} + a_2(z/\chi_n)^{-2} + ... + a_m(z/\chi_n)^{-m}}{1 + a_1(z/\chi_d)^{-1} + a_2(z/\chi_d)^{-2} + ... + a_m(z/\chi_d)^{-m}}$$

où $a_i$ sont les paramètres LPC et $\chi_n$, $\chi_d$ sont des coefficients de pondération indiquant la distance de la racine au cercle unité comme illustré à la figure 5, avec $\chi_n < \chi_d < 1$. On remarque que les pôles mais également les zéros sont situés aux mêmes fréquences que les formants ce qui a pour principale conséquence de limiter leur accentuation par rapport aux vallées.

Dans le post-filtre selon l'invention, les zéros sont calculés pour être placés environ à mi-distance des pôles pour accentuer considérablement le phénomène recherché. Cette disposition des pôles et des zéros amplifie l'accentuation des formants en augmentant l'amplitude des maxima et en diminuant celle des minima. Les valeurs de zéros sont obtenues artificiellement par un calcul d'interpolation entre les valeurs de pôles extraites de l'analyse LPC:

$$r_i = \frac{\alpha_i p_i + \alpha_2 p_{i-1}}{2}$$

où $p_i$ sont les pôles du filtre de synthèse LPC rangés par ordre de fréquences croissantes et où $\alpha_1$ et $\alpha_2$ sont des coefficients positifs. Ainsi le post-filtre s'écrit:

$$W(z) = \frac{1 + b_1(z/\chi_n)^{-1} + b_2(z/\chi_n)^{-2} + ... + b_m(z/\chi_n)^{-m}}{1 + a_1(z/\chi_d)^{-1} + a_2(z/\chi_d)^{-2} + ... + a_m(z/\chi_d)^{-m}}$$

$b_i$ étant les coefficients du polynôme construit à partir des valeurs $r_i$ précédemment calculées, $\chi_d$ et $\chi_n$, des coefficients de pondération indiquant la distance de la racine au cercle unité comme illustré à la figure 5, avec $\chi_n < \chi_d < 1$.

La position relative des zéros et des pôles est représentée dans le cercle unité à la figure 5. Les croix indiquent les valeurs de pôles et les ronds les valeurs de zéros du post-filtre W(z). L'angle du point considéré par rapport à l'abcisse indique sa fréquence. La distance du point par rapport au centre du cercle indique son amplitude. On a aussi indiqué sur la figure en pointillés, les valeurs de zéros et de pôles d'un post-filtre classique. On remarque que dans le cas du post-filtre classique, les pôles et les zéros sont situés aux mêmes fréquences, qui sont également les fréquences des formants. En revanche, dans le post-filtre selon l'invention, les zéros sont situés sur une fréquence intermédiaire entre 2 pôles.

Les post-filtres classiques produisent un signal dont l'aspect sonore est d'autant plus synthétique qu'ils en améliore l'intelligibilité. Selon un avantage de l'invention, ce post-filtrage produit un signal de sortie dont la sonorité synthétique est plus faiblement marquée que pour les post-filtres classiques, tout en augmentant notablement l'intelligibilité du signal de parole. Le résultat est une réelle amélioration de la qualité audio du signal de parole en sortie de la chaîne de communications.

Le récepteur téléphonique schématisé à la figure 6 comprend une chaîne d'émission constituée d'un microphone 61, d'un convertisseur analogique / numérique A/D, d'un codeur de parole 62, d'un codeur de canal 63 et d'un module dédié à la partie radio fréquence 64 relié à un duplexeur 65 couplé à une antenne d'émission / réception 66. La chaîne de réception comprend outre l'antenne 66, le duplexeur 65 et le module radio 64, un décodeur de canal 67, un décodeur de parole 68, un convertisseur numérique / analogique D/A et un haut-parleur 69. Les blocs 62, 63, 67 et 68 peuvent être réalisés par un processeur de signal du type DSP (de l'anglais Digital Signal Processor).

Selon un mode de réalisation préféré de l'invention, la partie analyse LPC est effectuée dans le DSP au niveau du codeur de parole 62 et la partie post-filtrage fait partie du décodeur de parole 68.

On a ainsi décrit et illustré à l'aide d'exemples un signal de parole, un dispositif et un procédé de filtrage, un récepteur téléphonique et un système de communications pour améliorer l'intelligibilité du signal de parole. Bien entendu, des variantes de réalisation pourront être apportées sans sortir du cadre de l'invention, notamment en ce qui concerne la structure des filtres utilisés pour l'analyse et la synthèse prédictive à court terme de la parole.

**Revendications**

1.  Dispositif de filtrage numérique pour filtrer un signal de parole ayant un spectre de fréquence présentant des formants séparés par des vallées, le dispositif comportant un circuit d'analyse prédictive du signal de parole et un organe de calcul pour synthétiser un post-filtre numérique du type zéros-pôles destiné à amplifier les formants et creuser les vallées, dispositif caractérisé en ce qu'il comporte un circuit d'extraction pour prélever des valeurs de pôles en sortie du circuit d'analyse prédictive et pour les fournir audit organe de calcul et des moyens d'interpolation entre lesdites valeurs de pôles pour déterminer les valeurs de zéros.

2.  Dispositif selon la revendication 1, caractérisé en ce que ledit circuit d'analyse prédictive comprend un filtre d'analyse LPC représenté par un polynôme doté de racines et en ce que le circuit d'extraction permet d'extraire lesdites racines pour en déduire les valeurs de pôles du post-filtre.

3.  Dispositif selon la revendication 1, les valeurs de pôles, notées $p_i$, étant classées par ordre de fréquences croissantes, les valeurs de zéros, notées $r_i$, sont déterminées d'après l'équation :

$$r_i = \frac{\alpha_1 p_i + \alpha_2 p_{i-1}}{2}$$

où $\alpha_1$ et $\alpha_2$ sont des coefficients de pondération positifs.

4.  Récepteur téléphonique destiné à recevoir un signal de parole ayant un spectre de fréquence présentant des formants séparés par des vallées, comprenant un circuit d'analyse prédictive du signal de parole et un organe de calcul pour synthétiser un post-filtre numérique du type zéros-pôles destiné à amplifier les formants et creuser les vallées, récepteur caractérisé en ce qu'il comporte un circuit d'extraction pour prélever des valeurs de pôles en sortie du circuit d'analyse prédictive et pour les fournir audit organe de calcul et des moyens d'interpolation entre lesdites valeurs de pôles pour déterminer les valeurs de zéros.

5.  Système de communication de signaux de parole en bande de base ayant au moins un canal de transmission et comportant:

    •   un dispositif de codage / décodage de parole prédictif pour restituer un signal de parole numérique à partir d'un signal original codé transmis sur ledit canal,
    •   un bloc de filtrage pour filtrer ledit signal de parole numérique, caractérisé en ce que le bloc de filtrage comporte des moyens de calcul pour synthétiser un filtre numérique du type zéros-pôles, un circuit d'extraction pour prélever des valeurs de pôles en sortie du dispositif de codage / décodage de parole prédictif et des moyens d'interpolation entre lesdites valeurs de pôles pour déterminer les valeurs de zéros.

**6.** Système selon la revendication 5, caractérisé en ce que le dispositif de codage / décodage de parole prédictif comporte des moyens d'analyse LPC pour déterminer les coefficients d'un filtre d'analyse LPC doté de racines et en ce que le circuit d'extraction comporte des moyens pour extraire lesdites racines et en déduire les valeurs de pôles.

**7.** Procédé de filtrage numérique pour filtrer un signal de parole ayant un spectre de fréquence présentant des formants séparés par des vallées, en vue d'amplifier les formants et creuser les vallées, comprenant:

- une étape d'analyse prédictive du signal de parole pour déterminer des coefficients LPC,
- une étape de calcul pour synthétiser un filtre du type zéros-pôles à partir desdits coefficients LPC et
- une étape de filtrage pour appliquer ledit filtre synthétisé au signal de parole, caractérisé en ce que l'étape de calcul comprend:
- une étape d'extraction destinée à extraire les racines d'un polynôme LPC construit à partir desdits coefficients LPC pour en déduire les valeurs de pôles et
- une étape d'interpolation entre lesdites valeurs de pôles pour déterminer lesdites valeurs de zéros.

**8.** Signal de parole obtenu par application d'un filtre numérique du type zéros-pôles à un premier signal de parole ayant un spectre de fréquence présentant des formants séparés par des vallées, ledit premier signal pouvant être modélisé à l'aide d'un filtre LPC inverse du type tous-pôles, caractérisé en ce que les valeurs de pôles du filtre de type zéros-pôles sont obtenues par extraction des pôles dudit filtre LPC inverse et en ce que les valeurs de zéros sont obtenues par un calcul d'interpolation entre lesdites valeurs de pôles du filtre de type tous-pôles.

P(f)

FIG.1

FIG.2

8

FIG.3

FIG.4

EP 0 989 544 A1

FIG.5

FIG.6

10

# EP 0 989 544 A1

Office européen
des brevets

**RAPPORT DE RECHERCHE EUROPEENNE**

Numéro de la demande

EP 99 20 3004

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 763 818 A (TOKYO SHIBAURA ELECTRIC CO) 19 mars 1997 (1997-03-19) * abrégé * --- | 1,5,7 | G10L19/14 |
| A | EP 0 573 398 A (HUGHES AIRCRAFT CO) 8 décembre 1993 (1993-12-08) * page 12, ligne 35 - ligne 45 * --- | 1,5,7 | |
| A | EP 0 774 750 A (NOKIA MOBILE PHONES LTD) 21 mai 1997 (1997-05-21) * abrégé; revendications 5,6 * ----- | 1,5,7 | |

| | | | DOMAINES TECHNIQUES RECHERCHES (Int.Cl.7) |
|---|---|---|---|
| | | | G10L |

Le présent rapport a été établi pour toutes les revendications

| Lieu de la recherche | Date d'achèvement de la recherche | Examinateur |
|---|---|---|
| LA HAYE | 23 décembre 1999 | Van Doremalen, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**
EP 99 20 3004

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-12-1999

| Document brevet cité au rapport de recherche | Date de publication | Membre(s) de la famille de brevet(s) | | Date de publication |
|---|---|---|---|---|
| EP 0763818 A | 19-03-1997 | JP | 9081192 A | 28-03-1997 |
| | | JP | 9138697 A | 27-05-1997 |
| EP 0573398 A | 08-12-1993 | US | 5495555 A | 27-02-1996 |
| | | AT | 174146 T | 15-12-1998 |
| | | CA | 2096991 A,C | 02-12-1993 |
| | | DE | 69322313 D | 14-01-1999 |
| | | DE | 69322313 T | 01-07-1999 |
| | | FI | 932465 A | 02-12-1993 |
| | | JP | 2010708 C | 02-02-1996 |
| | | JP | 6035500 A | 10-02-1994 |
| | | JP | 7036118 B | 19-04-1995 |
| | | NO | 931974 A | 02-12-1993 |
| | | US | 5734789 A | 31-03-1998 |
| | | US | 5651026 A | 22-07-1997 |
| | | US | 5596676 A | 21-01-1996 |
| EP 0774750 A | 21-05-1997 | JP | 9212198 A | 15-08-1997 |

EPO FORM P0460

Pour tout renseignement concernant cette annexe : voir Journal Officiel de l'Office européen des brevets, No.12/82